# EUROPÄISCHE PATENTSCHRIFT

(11) **EP 2 797 708 B1**
(45) Veröffentlichungstag und Bekanntmachung des Hinweises auf die Patenterteilung: **02.11.2016**
(21) Anmeldenummer: 12812634.9
(22) Anmeldetag: 20.12.2012
(51) Int. Cl.: B23B 31/30, B23B 31/00, B23B 31/117, B23B 31/20

(54) **WERKZEUGHALTER UND VERFAHREN ZUR HERSTELLUNG EINER WERKZEUGAUFNAHME FÜR EINEN SOLCHEN WERKZEUGHALTER**
TOOL HOLDER AND METHOD FOR PRODUCING A TOOL RECEIVING PORTION FOR SUCH A TOOL HOLDER
PORTE-OUTIL ET PROCÉDÉ DE PRODUCTION D'UN LOGEMENT D'OUTIL POUR UN TEL PORTE-OUTIL

(30) Priorität: 27.12.2011 DE 202011109498 U; 30.10.2012 DE 102012110392
(43) Veröffentlichungstag der Anmeldung: 05.11.2014
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2012/076410
(87) Internationale Veröffentlichungsnummer: WO 2013/098192

(56) Entgegenhaltungen:
- EP-A1- 2 749 367
- EP-A2- 1 029 620
- EP-B1- 2 001 624
- WO-A1-2007/118626
- JP-U- S4 895 278

## Beschreibung

Die Erfindung betrifft einen Werkzeughalter zum reibschlüssigen Spannen von Werkzeugen. Die Erfindung betrifft außerdem ein Spannsystem mit einem derartigen Werkzeughalter sowie ein Verfahren zur Herstellung einer Werkzeugaufnahme für einen solchen Werkzeughalter.

Aus der WO 2007/118626 A1 ist bereits ein Werkzeughalter mit einer innerhalb eines Grundkörpers angeordneten Dehnbuchse bekannt, die zur Aufnahme eines Werkzeugs ausgebildet und zum Spannen des Werkzeugs von außen mit Druckfluid beaufschlagbar ist. Der Werkzeughalter enthält ferner eine Auszugssicherung, die zur Verhinderung eines axialen Auswanderns des Werkzeugs während der Bearbeitung mehrere im Grundkörper angeordnete Sperrelemente zum Eingriff in korrespondierende Gegenelemente am Werkzeug enthält. Die Sperrelemente sind bei dem bekannten Werkzeughalter als Sperrstifte oder Kugeln ausgeführt, die in entsprechenden Bohrungen des Grundköpers verschiebbar geführt sind und in zugehörige Sperrnuten an dem Schaft eines zu spannenden Werkzeugs eingreifen. Bei diesem Werkzeughalter muss der Grundkörper jedoch aufwendig bearbeitet werden, um die Sperrelemente aufnehmen zu können.

Aus der EP 2749367 ist ein Werkzeughalter mit einem Grundkörper, einer verformbaren Aufnahme zum Spannen eines Werkzeugs und zwei einteilig mit der Aufnahme ausgebildeten Sperrelemente bekannt. Die Sperrelemente sind zur Verhinderung eines axialen Auswanderns des Werkzeugs aus der Aufnahme zum Eingriff in korrespondierende Gegenelemente am Werkzeug ausgebildet und sind gleichwinklig in Umfangsrichtung beabstandet in der Aufnahme angeordnet. Weitere Werkzeughalter mit festen Aufnahmen sind zudem aus der EP 1029620, der JP S4895278, der EP 2001624 sowie der JP 1430001 bekannt.

Aufgabe der Erfindung ist es, einen Werkzeughalter der eingangs genannten Art und ein Spannsystem mit einem solchen Werkzeughalter zu schaffen, die einfacher herstellbar und leicht montierbar sind.

Diese Aufgabe wird durch einen Werkzeughalter mit den Merkmalen des Anspruchs 1 und durch ein Spannsystem mit den Merkmalen des Anspruchs 13 sowie durch Verfahren zur Herstellung einer Werkzeugaufnahme für einen solchen Werkzeughalter mit den Merkmalen der Ansprüche 14 bis 16 gelöst. Zweckmäßige Weiterbildungen und vorteilhafte Ausgestaltungen der Erfindung sind in den Unteransprüchen angegeben.

Bei dem erfindungsgemäßen Werkzeughalter sind die Sperrelemente einteilig mit der Aufnahme ausgebildet und verlaufen wendelförmig in Umfangsrichtung. Dadurch kann die Aufnahme zusammen mit den Sperrelementen einfach montiert werden. Außerdem geht durch das Sperrelement kein Platz für die Aufnahme verloren. Der gesamte, zur Verfügung stehende Platz kann durch die Aufnahme genutzt werden, so dass kein Spannkraftverlust entsteht.

Das erfindungsgemäße Spannsystem umfasst einen Werkzeughalter und ein Werkzeug, wobei der Werkzeughalter einen Grundkörper, eine verformbare Aufnahme zum Spannen eines Werkzeugs und mindestens zwei mit der Aufnahme einteilig ausgeführte Sperrelemente enthält, die zur Verhinderung eines axialen Auswanderns des Werkzeugs aus dem Werkzeughalter in korrespondierende Gegenelemente am Werkzeug eingreifen.

In einer besonders zweckmäßigen Ausführung ist die Aufnahme eine in einer Aufnahmeöffnung des Grundkörpers angeordnete und von außen mit Druckfluid beaufschlagbare Dehnbuchse, an deren Innenseite die Sperrelemente angeordnet sind.

Die Aufnahme kann aber auch ein mit dem Grundköper einteilig ausgeführtes Schrumpffutter, ein Rollenkraftspannfutter, eine innerhalb eines Spannfutters angeordnete Reduzierhülse oder eine innerhalb einer Aufnahmeöffnung des Grundkörpers angeordnete und durch ein Spannelement verformbare Spannzange sein, an deren Innenseite die mindestens zwei Sperrelemente angeordnet sind, oder ein anderes reibschlüssig spannendes System.

In einer fertigungstechnisch zweckmäßigen und montagefreundlichen Ausführung können die mindestens zwei Sperrelemente an der Aufnahme direkt angeformt sein. Die Sperrelemente können bei einer Dehnhülse aber auch ein z.B. als Kugel, Sperrstift oder dgl. ausgeführtes separates Bauteil sein, das an der Dehnbuchse befestigt ist.

Die Aufnahme kann aus Keramik, Metall oder einer Mischung aus beidem hergestellt sein.

Zur direkten Anformung der Sperrelemente an der Aufnahme wird die Aufnahme erfindungsgemäß bevorzugt mittels eines materialabtragenden Verfahrens aus einem metallischen Vollmaterial durch Erzeugen einer Ausnehmung hergestellt wird, wobei bei der Erzeugung der Ausnehmung zur Ausbildung der einteilig mit der Aufnahme ausgebildeten Sperrelemente wenigstens zwei in der Ausnehmung vorstehende Vorsprünge ausgespart wird. Dadurch wird das Sperrelement einstückig an der Aufnahme angeformt. Als besonders zweckmäßig haben sich zur Fertigung der Aufnahme aus einem metallischen Vollmaterial materialabtragende Funkenerosionsverfahren wie das unter dem Kürzel EDM ("electrical discharge machining") und/oder elektrochemische Abtragverfahren wie das unter dem Kürzel ECM ("electrochemical machining") oder eine Kombination davon, wie das als ECDM ("electrochemical discharge machining") bekannte Verfahren erwiesen. Mit solchen materialabtragenden Verfahren lassen sich die komplexen Strukturen für die Ausbildung von in der Aufnahme nach innen vorstehenden Vorsprüngen herstellen, welche die erfindungsgemäßen Sperrelemente bilden. Dabei können zur Erzeugung der Ausnehmung in einem Vollmaterialblock auch zunächst in einem ersten Bearbeitungsschritt zerspanende Verfahren und in einem abschließenden Bearbeitungsschritt materialabtragende Funkenerosionsverfahren wie das unter dem Kürzel EDM ("electrical discharge machining") und/oder elektrochemische Abtragverfahren angewandt werden, mit denen dann die feinen Strukturen zur Ausbildung der Vorsprünge in der Ausnehmung ausgeformt werden, welche die Sperrelemente bilden. Es versteht sich, dass die Ausnehmung auch komplett mit zerspanenden Verfahren erzeugt werden kann.

Bei einer besonders vorteilhaften Ausführung sind die mindestens zwei Sperrelemente an der Aufnahme als nach innen ragende Vorsprünge zum Eingriff in eine entsprechende Vertiefung an dem Schaft eines zu spannenden Werkzeugs ausgeführt, wobei diese Vorsprünge zweckmäßig einstückig mit der Aufnahme ausgebildet sind und - wie oben beschrieben - mittels eines materialabtragenden Funkenerosionsverfahren und/oder mittels eines elektrochemischen Abtragverfahrens in einer Ausnehmung aus einem Vollmaterialblock erzeugt werden. In entsprechender Weise könnten die an der Aufnahme vorgesehenen Sperrelemente aber auch als Vertiefungen und die dazugehörigen Gegenelemente an dem Werkzeug als Vorsprünge ausgeführt sein. Die Sperrelemente können zum vereinfachten Eingriff in die zugehörigen Gegenelemente einen halb- oder teilkreisförmigen Querschnitt aufweisen.

In einer vorteilhaften Weise können sich die mindestens zwei Sperrelemente in Art eines Muttergewindegangs zumindest über einen Teilumfang der Aufnahme an deren Innenseite erstrecken. Eine über den Umfang gleichmäßigere Halterung kann dadurch erreicht werden, dass an der Innenseite der Aufnahme mehrere in Art eines Muttergewindegangs zumindest über einen Teilumfang der Aufnahme verlaufende Sperrelemente angeordnet sind. Bei mehreren Sperrelementen sind diese zweckmäßigerweise gleichwinklig in Umfangsrichtung beabstandet an der Aufnahme angeordnet.

In einem alternativen Herstellungsverfahren kann die Aufnahme auch aus Keramik- und/oder Metallpulver durch Press- oder Lasersintern hergestellt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Werkzeughalter mit einer Dehnhülse zum hydraulischen Spannen eines Werkzeugs in einem Längsschnitt;
- **Figur 2**: die Dehnhülse von Figur 1 in einer vergrößerten Schnittansicht;
- **Figur 3**: die Dehnhülse in einer Perspektive;
- **Figur 4**: eine Ansicht der Dehnhülse von hinten;
- **Figur 5**: eine Detailansicht der Dehnhülse in einem Teilschnitt;
- **Figur 6**: die Detailansicht A von Figur 2;
- **Figur 7**: ein erstes Ausführungsbeispiel eines Spannsystems mit Werkzeughalter, Dehnhülse und Werkzeug in einer Perspektive im Schnitt;
- **Figur 8**: ein zweites Ausführungsbeispiel eines Spannsystems mit Werkzeughalter und Werkzeug in einer Perspektive im Schnitt;
- **Figur 9**: ein drittes Ausführungsbeispiel eines Spannsystems mit Werkzeughalter, Reduzierhülse und Werkzeug in einer Perspektive im Schnitt;
- **Figur 10**: ein viertes Ausführungsbeispiel eines Spannsystems mit Werkzeughalter, Spannzange und Werkzeug in einer Perspektive im Schnitt und
- **Figur 11**: ein fünftes Ausführungsbeispiel eines Spannsystems mit einem Rollenkraftspannfutter und Werkzeug in einer Perspektive im Schnitt.

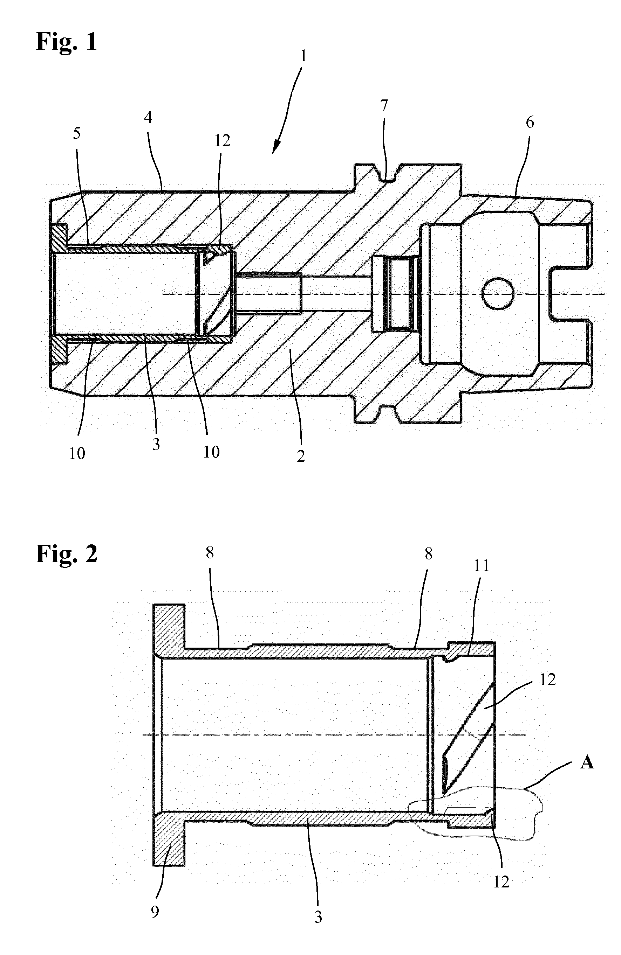

In Figur 1 ist eine hier als HSK-Werkzeugaufnahme dargestellte Werkzeugaufnahme 1 mit einem rotationssymmetrischen Grundkörper 2 und einer im Grundkörper 2 angeordneten Dehnbuchse 3 zur Aufnahme des Zylinderschafts eines hier nicht dargestellten Werkzeugs im Längsschnitt gezeigt. Der Grundkörper 2 weist einen zylindrischen vorderen Teil 4 mit einer Aufnahmeöffnung 5 für die Dehnbuchse 3 und einen konischen hinteren Teil 6 zur Aufnahme in einer Arbeitsspindel einer Werkzeugmaschine auf. Zwischen dem zylindrischen vorderen Teil 4 und dem konischen hinteren Teil 6 ist an der Außenseite des Grundkörpers 2 eine Greiferrille 7 vorgesehen.

Die in den Figuren 2 gesondert dargestellte Dehnbuchse 3 weist an ihrer Außenseite zwei voneinander beabstandete, umlaufende Vertiefungen 8 und einen Ringbund 9 am vorderen Ende auf. Zwischen den Vertiefungen 8 und der Innenwand des Grundkörpers 2 im Bereich der Aufnahmeöffnung 5 werden in Figur 1 dargestellte Druckkammern 10 zur Aufnahme eines Druckfluids begrenzt. Die Dehnbuchse 3 ist zweckmäßigerweise an ihrem vorderen und hinteren Ende fest mit dem Grundkörper 2 verbunden. Sie kann mit diesem verlötet oder auf andere Weise fest mit dem Grundkörper 2 verbunden sein. Die Druckkammern 10 sind z.B. über hier nicht dargestellte Kanäle innerhalb des Grundkörpers 2 mit einem ebenfalls im Grundkörper 2 angeordneten Druckraum verbunden, dessen Volumen durch einen z.B. mittels einer Schraube verstellbaren Kolben veränderbar ist. Durch Verstellung des Kolbens mit Hilfe der Schraube kann der Druck des im Druckraum und den Druckkammern 10 befindlichen Druckfluids erhöht und dadurch die Dehnbuchse 3 radial nach innen gedrückt werden. Durch diese an sich bekannte und daher nicht dargestellte Anordnung kann die Dehnbuchse 3 gleichmäßig an den in die Dehnbuchse 3 eingeführten Zylinderschaft eines zu spannenden Werkzeugs angepresst werden, wodurch ein zentrisches und vollflächiges Spannen mit hoher Spannkraft ermöglicht wird.

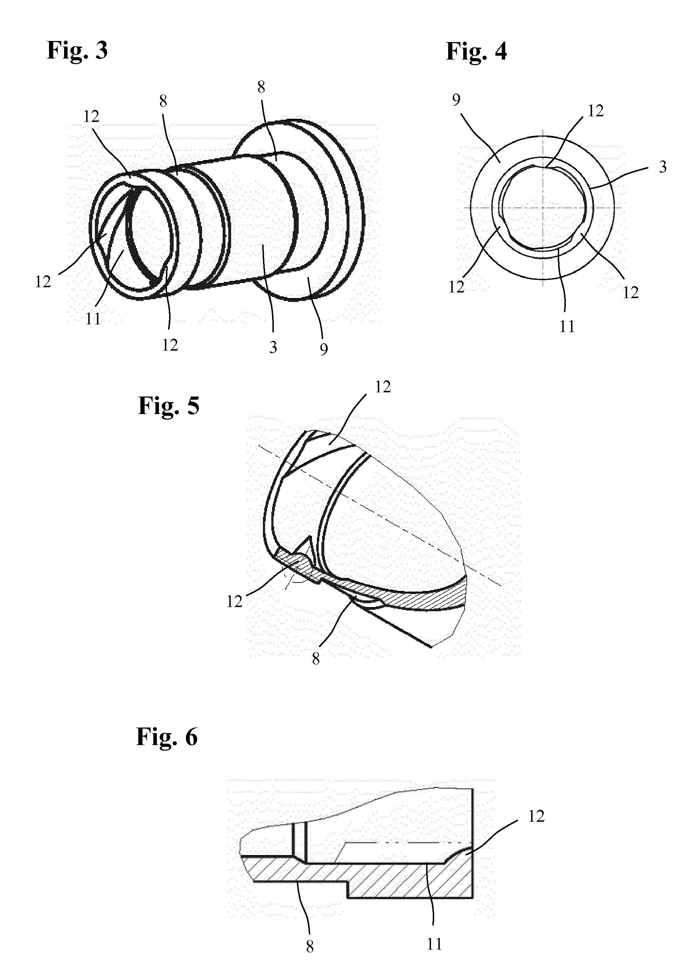

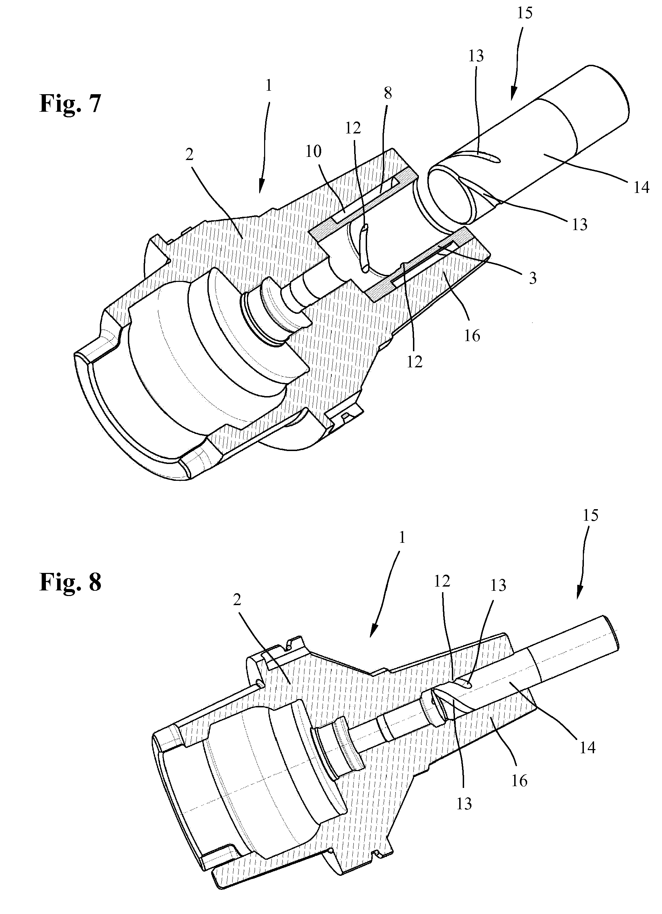

An der Innenseite der Dehnbuchse 3 sind in einem im Innendurchmesser erweiterten hinteren Bereich 11 nach innen vorstehende Sperrelemente 12 vorgesehen, die in Art eines Muttergewindegangs verlaufen und zum Eingriff in korrespondierende Gegenelemente 13 an einem in Figur 7 dargestellten Zylinderschaft 14 eines Werkzeugs 15 gelangen. Die Gegenelemente 13 sind in Art eines Bolzengewindegangs ausgeführt. Durch die in die entsprechenden Gegenelemente 13 am Werkzeug 15 eingreifenden Sperrelemente 12 wird eine Auszugssicherung geschaffen, die ein z.B. durch Schwingungen während der Bearbeitung bedingtes axiales Auswandern des Werkzeugs 15 verhindert. Beim gezeigten Ausführungsbeispiel sind die Sperrelemente 12 als in Umtangsrichtung wendelförmig verlaufende Vorsprünge mit halbkreisförmigem Querschnitt ausgeführt. Wie aus Figur 4 hervorgeht, sind bei dem Ausführungsbeispiel drei im Unfangsrichtung gleichwinklig beabstandete Vorsprünge in Form von Muttergewindegängen als Sperrelemente 12 vorgesehen, die in Art eines dreigängigen Innen-Muttergewindes mit jeweils demselben Steigungswinkel an der Innenwand der Dehnbuchse 3 verlaufen. Die zu den Sperrelementen 12 passenden Gegenelemente sind als Sperrnuten ausgebildet, die in Art eines dreigängigen Bolzengewindes an der Außenseite des Zylinderschafts 14 eines Werkzeugs 15 beginnend an der hinteren Stirnfläche entlang der Umfangsfläche wendelfömig verlaufen.

Die Dehnbuchse 3 wird zweckmäßig aus einem metallischen Vollmaterialblock (bspw. einem Vollzylinder) durch Erzeugen einer Ausnehmung mittels eines materialabtragenden Funkenerosionsverfahrens (wie z.B. EDM oder ECDM) hergestellt, wobei die Sperrelemente 12 als in der zylindrischen Ausnehmung nach innen vorstehende Vorsprünge bei der Erzeugung der Ausnehmung ausgespart werden.

Zum Einspannen eines Werkzeugs in den Werkzeughalter 1, muss das Werkzeug beim Einsetzen in den Werkzeughalter 1 zunächst so gedreht werden, so dass die Sperrelemente 12 an der Dehnbuchse 3 in Eingriff mit den entsprechenden Gegenelementen 13 am Werkzeug 15 gelangen. Dann kann die Dehnbuchse 3 vom außen mit Druckfluid beaufschlagt werden. Durch den Druck wird die Dehnbuchse 3 nach innen gedrückt, wodurch das Werkzeug 15 gespannt wird. Über den formschlüssigen Eingriff der Sperrelemente 12 in die dazugehörigen Gegenelemente 13 kann ein axiales Auswandern des Werkzeugs 15 aus dem Werkzeughalter 1 verhindert werden.

In Figur 7 ist ein Spannsystem mit einem Werkzeughalter 1, einer Dehnbuchse 3 und einem z.B. als Fräser oder Bohrer ausgebildeten Werkzeug 15 gezeigt. Im Unterschied zur Ausführung der Figuren 1 bis 6 weist die Dehnbuchse 3 an ihrer Außenseite nur eine Vertiefung 8 zur Bildung einer Druckkammer 10 auf. Auch bei dieser Ausführung sind an der Innenseite der Dehnbuchse 3 nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 vorgesehen.

In Figur 8 ist ein weiteres Ausführungsbeispiel eines Spannsystems mit Werkzeughalter 1 und einem als Fräser, Bohrer oder dgl. ausgebildeten Werkzeug 15 gezeigt. Bei dieser Ausführung ist die Aufnahme als ein mit dem Grundkörper 2 einteilig ausgeführtes Schrumpffutter 16 ausgebildet. Bei einem solchen Werkzeughalter 1 wird das Schrumpffutter 16 z.B. durch induktive Erwärmung thermisch erhitzt, wodurch sich der Innendurchmesser des Schrumpffutters 16 vergrößert. Im erwärmten Zustand wird in das Schrumpffutter 16 ein Werkzeug 15 eingesetzt, wobei das Verhältnis des Innendurchmessers des Schrumpffutters 16 zum Außendurchmesser des Werkzeugschafts 14 derart ausgelegt ist, dass das Werkzeug 15 beim anschließenden Abkühlen des Schrumpffutters 16 fest in dem Schrumpffutter 16 gehalten wird. Bei dieser Ausführung sind an der Innenseite des Schrumpffutters 16 ebenfalls nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 vorgesehen.

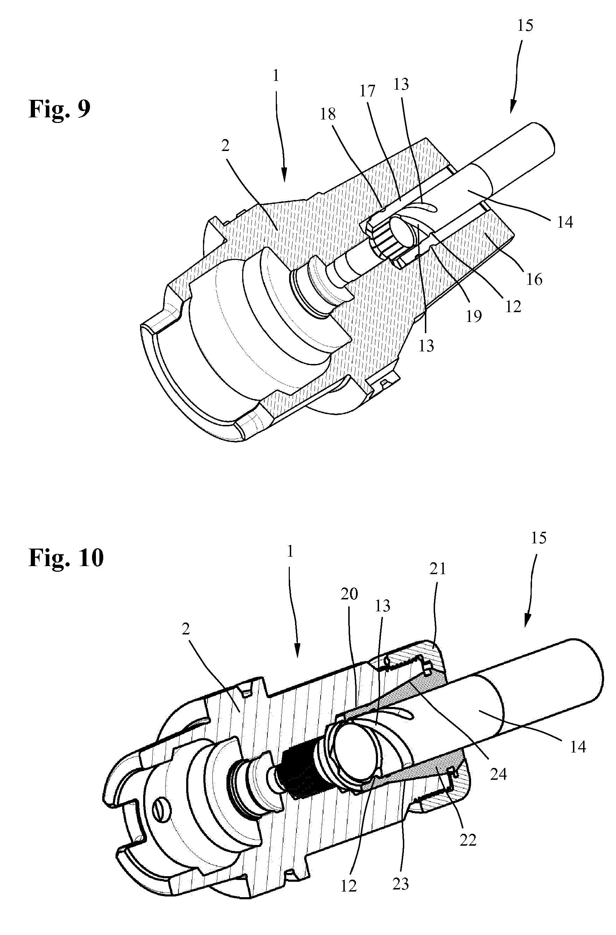

Bei einem in Figur 9 dargestellten weiteren Ausführungsbeispiel ist die Aufnahme ebenfalls als ein mit dem Grundkörper 2 einteilig ausgeführtes Schrumpffutter 16 ausgeführt. Hier wird das Werkzeug 15 innerhalb des Schrumpffutters 16 jedoch über eine Reduzierhülse 17 gespannt. Die Reduzierhülse 17 ist in an sich bekannter Weise als Schlitzhülse mit mehreren Axialschlitzen und einem an den Außendurchmesser des Werkzeugschafts 14 angepassten Innendurchmesser ausgebildet. Die Reduzierhülse 17 weist an ihrer Innenseite ebenfalls nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 auf. Die Reduzierhülse 17 enthält außerdem an ihrer Außenseite wendelförmig verlaufende Sperrnuten 18 zum Eingriff mit Sperrelementen 19, die in Form von nach innen vorstehenden, wendelförmig verlaufenden Vorsprüngen an der Innenseite des Schrumpffutters 16 angeformt sind. Dadurch wird auch eine Auszugssicherung zur Verhinderung eines axialen Auswanderns der Reduzierhülse 17 erreicht.

Figur 10 zeigt ein weiteres Ausführungsbeispiel, bei dem die Aufnahme als eine innerhalb einer Aufnahmeöffnung 20 des Grundkörpers 2 angeordnete und durch ein Spannelement 21 verformbare Spannzange 22 ausgebildet ist. Die Spannzange 22 weist eine äußere Konusfläche 23 zur Anlage an einer inneren Konusfläche 24 der Aufnahmeöffnung 20 auf. Die Konusflächen 23 und 24 sind so aufeinander abgestimmt, dass die Spannzange 22 durch Axialverschiebung nach innen zusammengedrückt werden kann und dadurch den Werkzeugschaft 14 eines Werkzeugs 15 klemmt. Die Spannzange 22 weist an ihrer Innenseite ebenfalls nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 auf. Die Axialverschiebung der Spannzange 22 erfolgt durch das Spannelement 21, das hier als ein auf ein Außengewinde am vorderen Ende des Grundkörpers 2 aufgeschraubter Gewindering ausgeführt ist.

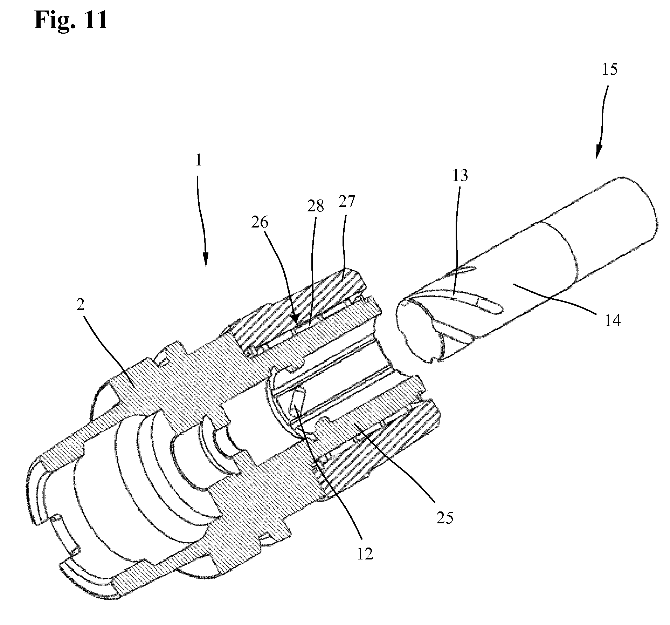

Der Werkzeughalter 1 kann in einer weiteren, in Figur 11 dargestellten Ausführung auch als so genanntes Rollenkraftspannfutter ausgebildet sein. Der Grundkörper 2 weist an einem vorderen Teil einen mit Längsschlitzen versehenen Spannbereich 25 als Aufnahme für den Werkzeugschaft 14 des Werkzeugs 15 auf. An dem verformbaren Spannbereich 25 ist eine üblicherweise mittels eines Nadellagers 26 oder eines anderen Wälzlagers drehbar gelagerte Spannmutter 27 angeordnet, durch deren Drehung ein Spanndruck auf den verformbaren Spannbereich 25 ausgeübt werden kann. Die innerhalb eines Lagerkäfigs gelagerten Nadelrollen 28 wälzen sich bei einer Drehung der Spannmutter 27 auf der sich verjüngenden Innenfläche der Spannmutter 27 und einer sich verjüngenden äußeren Oberfläche des verformbaren Spannbereichs 25 derart ab, dass sich beim Anziehen der Spannmutter 27 die Spannmutter 27 über die Nadelrollen 28 gegen den verformbaren Spannbereich 25 drückt, um den verformbaren Spannbereich 25 gegen den Schaft 14 des Werkzeugs 15 zu drücken. In der gezeigten Ausführungsform sind die nach innen vorstehenden Sperrelemente 12 ebenfalls als wendelförmig verlaufende Vorsprünge zum Eingriff in als Sperrnuten ausgeführte Gegenelemente 13 an dem Werkzeugschaft 14 des Werkzeugs 15 ausgebildet. Die Sperrelemente 12 sind dabei auf der Innenseite des verformbaren Spannbereichs 25 angeordnet. Es ist jedoch auch möglich, die Sperrelemente 12 weiter innerhalb des Grundkörpers 2 anzuordnen. Zudem könnte auch eine Reduzierhülse, wie in Figur 9 gezeigt, zwischen dem verformbaren Spannbereich 25 und dem Werkzeugschaft 14 angeordnet sein.

Die Erfindung ist selbstverständlich nicht auf HSK-Werkzeugaufnahmen beschränkt. An dem Grundkörper 2 können in entsprechender Weise auch SK-, JIS-, BT-, ABS-, oder Capto-Schnittstellen und dgl. vorgesehen sein.

Die Sperrelemente müssen nicht zwingend im verformbaren Bereich der Aufnahme angeordnet sein. Sie können auch im nichtverformbaren Bereich oder im Bereich des Grundhalters liegen.

## Patentansprüche

1. Werkzeughalter (1) mit einem Grundkörper (2), einer verformbaren Aufnahme (3; 16; 17; 22; 25) zum Spannen eines Werkzeugs (15) und mindestens zwei Sperrelemente (12), die zur Verhinderung eines axialen Auswandern des Werkzeugs (15) aus der Aufnahme zum Eingriff in die korrespondierenden Gegenelemente (13) am Werkzeug (15) ausgebildet sind, wobei die Sperrelemente (12) gleichwinklig in Umfangsrichtung beabstandet in der Aufnahme angeordnet sind, **dadurch gekennzeichnet, dass** die Sperrelemente (12) wendelförmig in Umfangsrichtung verlaufen und einteilig mit der Aufnahme (3; 16; 17; 22; 25) ausgebildet sind.

2. Werkzeughalter nach Anspruch 1, **dadurch gekennzeichnet, dass** die Aufnahme eine in einer Aufnahmeöffnung (5) des Grundkörpers (2) angeordnete und von außen mit Druckfluid beaufschlagbare Dehnbuchse (3) ist, an deren Innenseite das mindestens eine Sperrelement (12) angeordnet ist.

3. Werkzeughalter nach Anspruch 1, **dadurch gekennzeichnet, dass** die Aufnahme als ein mit dem Grundköper (2) einteilig ausgeführtes Schrumpffutter (16) ausgebildet ist, an dessen Innenseite das mindestens eine Sperrelement (12) angeordnet ist.

4. Werkzeughalter nach Anspruch 1, **dadurch gekennzeichnet, dass** die Aufnahme als eine innerhalb eines Schrumpffutters (16) angeordnete Reduzierhülse (17) ausgebildet ist, an deren Innenseite das mindestens eine Sperrelement (12) angeordnet ist.

5. Werkzeughalter nach Anspruch 1, **dadurch gekennzeichnet, dass** die Aufnahme als eine innerhalb einer Aufnahmeöffnung (20) des Grundkörpers (2) angeordnete und durch ein Spannelement (21) verformbare Spannzange (22) ausgebildet ist, an deren Innenseite das mindestens eine Sperrelement (12) angeordnet ist.

6. Werkzeughalter nach Anspruch 1, **dadurch gekennzeichnet, dass** die Aufnahme als an einem vorderen Teil des Grundkörpers (2) angeordneter Spannbereich (25) ausgebildet ist, der durch eine mittels eines Wälzlagers (28) drehbar auf dem Grundkörper (2) gelagerte Spannmutter (27) verformbar ist.

7. Werkzeughalter nach einem der Ansprüche 1 bis 6, **dadurch gekennzeichnet, dass** das mindestens eine Sperrelement (12) als nach innen ragender Vorsprung ausgebildet ist.

8. Werkzeughalter nach einem der Ansprüche 1 bis 7, **dadurch gekennzeichnet, dass** das Sperrelement einen halb- oder teilkreisförmigen Querschnitt aufweist.

9. Werkzeughalter nach einem der Ansprüche 1 bis 8, **dadurch gekennzeichnet, dass** sich das mindestens eine Sperrelement (12) in Art eines Muttergewindegangs zumindest über einen Teilumfang der Aufnahme (3; 16; 17; 22; 25) an deren Innenseite erstreckt.

10. Werkzeughalter nach einem der Ansprüche 1 bis 9, **dadurch gekennzeichnet, dass** an der Innenseite der Aufnahme (3; 16; 17; 22; 25) mehrere in Art eines Muttergewindegangs zumindest über einen Teilumfang der Dehnbuchse (3) verlaufende Sperrelemente (12) angeordnet sind.

11. Werkzeughalter nach Anspruch 10, **dadurch gekennzeichnet, dass** die mehreren Sperrelemente (12) an der Aufnahme (3; 16; 17; 22; 25) in deren Umfangsrichtung gleichwinklig beabstandet angeordnet sind.

12. Werkzeughalter nach einem der vorhergehenden Ansprüche, **dadurch gekennzeichnet, dass** die Aufnahme (3; 16; 17; 22; 25) aus Keramik, Metall oder einer Mischung aus beidem besteht.

13. Spannsystem mit einem Werkzeughalter (1) und einem Werkzeug (15), wobei der Werkzeughalter (1) mindestens zwei Sperrelemente (12) enthält , die zur Verhinderung eines axialen Auswandern des Werkzeugs (15) aus dem Werkzeughalter (1) zum Eingriff in korrespondierende Gegenelemente (13) am Werkzeug (15) ausgebildet sind, **dadurch gekennzeichnet, dass** der Werkzeughalter (1) nach einem der Ansprüche 1 bis 12 ausgebildet ist.

14. Verfahren zur Herstellung einer verformbaren Aufnahme (3; 16; 17; 22; 25) zum Spannen eines Werkzeugs (15), welche in einen Grundkörper (2) eines Werkzeughalters (1) einsetzbar oder mit diesem einteilig ausgebildet ist, wobei die Aufnahme (3; 16; 17; 22; 25) mindestens zwei Sperrelemente (12) aufweist, die zur Verhinderung eines axialen Auswandern des Werkzeugs (15) aus der Aufnahme (3; 16; 17; 22; 25) zum Eingriff in die korrespondierenden Gegenelemente (13) am Werkzeug (15) ausgebildet sind, wobei die Sperrelemente (12) gleichwinklig in Umfangsrichtung beabstandet in der Aufnahme angeordnet sind, **dadurch gekennzeichnet, dass** die Aufnahme (3; 16; 17; 22; 25) mittels eines materialabtragenden Verfahrens aus einem metallischen Vollmaterial durch Erzeugen einer Ausnehmung hergestellt wird, wobei bei der Erzeugung der Ausnehmung zur Ausbildung der wendelförmig in Umfangsrichtung verlaufenden und einteilig mit der Aufnahme (3; 16; 17; 22; 25) ausgebildeten Sperrelemente (12) wenigstens zwei in der Ausnehmung vorstehende Vorsprünge ausgespart oder zwei Vertiefungen in der Aufnahme eingebracht werden.

15. Verfahren nach Anspruch 14, **dadurch gekennzeichnet, dass** es sich bei dem materialabtragenden Verfahren um ein Funkenerosionsverfahren und/oder ein elektrochemisches Abtragverfahren oder eine Kombination davon handelt.

16. Verfahren zur Herstellung einer verformbaren Aufnahme (3; 16; 17; 22; 25) zum Spannen eines Werkzeugs (15), welche in einen Grundkörper (2) eines Werkzeughalters (1) einsetzbar oder mit diesem einteilig ausgebildet ist, wobei die Aufnahme (3; 16; 17; 22; 25) mindestens zwei Sperrelemente (12) aufweist, die zur Verhinderung eines axialen Auswandern des Werkzeugs (15) aus der Aufnahme (3; 16; 17; 22; 25) zum Eingriff in die korrespondierenden Gegenelemente (13) am Werkzeug (15) ausgebildet sind, wobei die Sperrelemente (12) gleichwinklig in Umfangsrichtung beabstandet in der Aufnahme angeordnet sind, **dadurch gekennzeichnet, dass** die Aufnahme (3; 16; 17; 22; 25) aus Keramik- und/oder Metallpulver durch Presssintern oder Lasersintern hergestellt wird, wobei bei der Erzeugung der Ausnehmung zur Ausbildung der wendelförmig in Umfangsrichtung verlaufenden und einteilig mit der Aufnahme (3; 16; 17; 22; 25) ausgebildeten Sperrelemente (12) wenigstens zwei in der Ausnehmung vorstehende Vorsprünge ausgespart oder zwei Vertiefungen in der Aufnahme eingebracht werden.

## Claims

1. Tool holder (1) with a main part (2), a deformable receiving portion (3; 16, 17; 22; 25) for clamping a tool (15) and at least two blocking elements (12) that are formed to prevent axial slippage of the tool (15) from the receiving portion by engaging with the corresponding counter elements (13) on the tool (15), wherein the blocking elements (12) are set apart at equal angles in the peripheral direction within the receiving portion, **characterized in that** the blocking elements (12) are helically running in the peripheral direction and are formed integrally with the receiving portion (3; 16; 17; 22; 25).

2. Tool holder according to Claim 1, **characterized in that** the receiving portion is an expansion sleeve (3) deployed in a receiving opening (5) of the main part (2) and subject to external pressure with hydraulic fluid, on the inner side of which is deployed the at least one blocking element (12).

3. Tool holder according to Claim 1, **characterized in that** the receiving portion is formed as a contracting chuck (16) realized integrally with the main part (2), on the inside of which is deployed the at least one blocking element (12).

4. Tool holder according to Claim 1, **characterized in that** the receiving portion is formed as reducing sleeve (17) deployed within a contracting chuck (16), on the inside of which is deployed the at least one blocking element (12).

5. Tool holder according to Claim 1, **characterized in that** the receiving portion is formed as a collet chuck (22) that is deployed within the a receiving opening (20) of the main part (2) and can be deformed by a clamping element (21), on the inside of which is deployed the at least one blocking element (12).

6. Tool holder according to Claim 1, **characterized in that** the receiving portion is formed as a clamping region (25) deployed on a front part of the main part (2), that can be deformed by a clamping nut (27) seated on the main part (2) in such a way that it can be rotated by means of a roller bearing (28).

7. Tool holder according to one of Claims 1-6, **characterized in that** the at least one blocking element (12) is formed as an inward-extending projection.

8. Tool holder according to one of Claims 1-7, **characterized in that** the blocking element has a semicircular or partially circular cross section.

9. Tool holder according to one of Claims 1-8, **characterized in that** at least one blocking element (12) can stretch at least over a partial circumference of the receiving portion (3; 16; 17; 22; 25) on the inner side thereof, in the manner of a female thread.

10. Tool holder according to one of Claims 1-9, **characterized in that** multiple blocking elements (12) running at least over a partial circumference of the expansion sleeve (3) are deployed on the inside of the receiving portion (3; 16; 17; 22; 25).

11. Tool holder according to Claim 10, **characterized in that** the multiple blocking elements (12) are deployed set apart from one another at equal angles in the receiving portion (3; 16; 17; 22; 25) in their peripheral direction.

12. Tool holder according to one of the preceding claims, **characterized in that** the receiving portion (3; 16; 17; 22; 25) consists of ceramic, metal, or a mixture of the two.

13. Clamping system with a tool holder (1) and a tool (15), wherein the tool holder (1) contains at least two blocking elements (12) that are configured to prevent the axial slippage of the tool (15) from the tool holder (1) by engaging with corresponding counter elements (13) on the tool (15), **characterized in that** the tool holder (1) is configured according to one of Claims 1-12.

14. Method of production for a deformable receiving portion (3; 16, 17; 22; 25) for clamping a tool (15), which can be inserted into or is formed integrally with a main part (2) of a tool holder (1), wherein the receiving portion (3; 16; 17; 22; 25) comprises at least two blocking elements (12) that are formed to prevent axial slippage of the tool (15) from the receiving portion (3; 16; 17; 22; 25) by engaging with the corresponding counter elements (13) on the tool (15), wherein the blocking elements (12) are set apart at equal angles in the peripheral direction within the receiving portion, **characterized in that** the receiving portion (3; 16; 17; 22; 25) is produced from a metallic solid material by producing a recess by means of a material-removing method, wherein in the process of forming the recess for forming the blocking elements (12) running helically in the peripheral direction and formed integrally with the receiving portion (3; 16; 17; 22; 25), at least two projections projecting into the recess are omitted, or two cavities are formed in the receiving portion.

15. Method according to Claim 14, **characterized in that** the material-removing method is a spark-erosion method and/or an electrochemical removal method or a combination thereof.

16. Method of production for a deformable receiving portion (3; 16, 17; 22; 25) for clamping a tool (15), which can be inserted into or is formed integrally with a main part (2) of a tool holder (1), wherein the receiving portion (3; 16; 17; 22; 25) comprises at least two blocking elements (12) that are formed to prevent axial slippage of the tool (15) from the receiving portion (3; 16; 17; 22; 25) by engaging with the corresponding counter elements (13) on the tool (15), wherein the blocking elements (12) are set apart at equal angles in the peripheral direction within the receiving portion, **characterized in that** the receiving portion (3; 16; 17; 22; 25) is produced from a ceramic and/or metal powder through pressure-molding or laser sintering, wherein in the process of forming the recess for forming the blocking elements (12) running helically in the peripheral direction and formed integrally with the receiving portion (3; 16; 17; 22; 25), at least two projections projecting into the recess are omitted, or two cavities are formed in the receiving portion.

## Revendications

1. Porte-outil (1) comprenant un corps de base (2), un logement (3 ; 16 ; 17 ; 22 ; 25) déformable pour serrer un outil (15) et au moins deux éléments de blocage (12), qui sont réalisés afin de venir en prise avec des contre-éléments (13) correspondants au niveau de l'outil (15) pour empêcher une sortie axiale de l'outil (15) hors du logement, dans lequel les éléments de blocage (12) sont disposés dans le logement à distance dans la direction périphérique selon des angles identiques, **caractérisé en ce que** les éléments de blocage (12) s'étendent dans la direction périphérique de manière à présenter une forme hélicoïdale et sont réalisés d'un seul tenant avec le logement (3 ; 16 ; 17 ; 22 ; 25).

2. Porte-outil selon la revendication 1, **caractérisé en ce que** le logement est une manchette d'expansion (3) disposée dans un orifice de logement (5) du corps de base (2) et pouvant être soumise à l'action d'un fluide sous pression depuis l'extérieur, au niveau du côté intérieur de laquelle l'au moins un élément de blocage (12) est disposé.

3. Porte-outil selon la revendication 1, **caractérisé en ce que** le logement est réalisé sous la forme d'un mandrin de frettage (16) réalisé d'un seul tenant avec le corps de base (2), au niveau du côté intérieur duquel l'au moins un élément de blocage (12) est disposé.

4. Porte-outil selon la revendication 1, **caractérisé en ce que** le logement est réalisé sous la forme d'une douille de réduction (17) disposée à l'intérieur du mandrin de frettage (16), au niveau du côté intérieur de laquelle l'au moins un élément de blocage (12) est disposé.

5. Porte-outil selon la revendication 1, **caractérisé en ce que** le logement est réalisé sous la forme d'une pince de serrage (22) disposée à l'intérieur de l'orifice de logement (20) du corps de base (2) et pouvant être déformée par un élément de serrage (21), au niveau du côté intérieur de laquelle l'au moins un élément de blocage (12) est disposé.

6. Porte-outil selon la revendication 1, **caractérisé en ce que** le logement est réalisé sous la forme d'une zone de serrage (25) disposée au niveau d'une partie avant du corps de base (2), laquelle zone de serrage peut être déformée par un écrou de serrage (27) monté de manière à pouvoir tourner au moyen d'un palier à roulement (28) sur le corps de base (2).

7. Porte-outil selon l'une quelconque des revendications 1 à 6, **caractérisé en ce que** l'au moins un élément de blocage (12) est réalisé sous la forme d'une partie faisant saillie dépassant vers l'intérieur.

8. Porte-outil selon l'une quelconque des revendications 1 à 7, **caractérisé en ce que** l'élément de blocage présente une section transversale de forme semi-circulaire ou en partie circulaire.

9. Porte-outil selon l'une quelconque des revendications 1 à 8, **caractérisé en ce que** l'au moins un élément de blocage (12) s'étend à la manière d'un pas de filetage d'écrou au moins sur une périphérie partielle du logement (3 ; 16 ; 17 ; 22 ; 25) au niveau de son côté intérieur.

10. Porte-outil selon l'une quelconque des revendications 1 à 9, **caractérisé en ce que** plusieurs éléments de blocage (12) s'étendant à la manière d'un pas de filetage d'écrou au moins sur une périphérie partielle de la manchette extensible (3) sont disposés au niveau du côté intérieur du logement (3 ; 16 ; 17 ; 22 ; 25).

11. Porte-outil selon la revendication 10, **caractérisé en ce que** les nombreux éléments de blocage (12) sont disposés à distance selon des angles identiques au niveau du logement (3 ; 16 ; 17 ; 22 ; 25) dans leur direction périphérique.

12. Porte-outil selon l'une quelconque des revendications précédentes, **caractérisé en ce que** le logement (3 ; 16 ; 17 ; 22 ; 25) est constitué de céramique, de métal ou d'un mélange de ces derniers.

13. Système de serrage comprenant un porte-outil (1) et un outil (15), dans lequel le porte-outil (1) contient au moins deux éléments de serrage (12), qui sont réalisés afin de venir en prise avec des contre-éléments (13) correspondants au niveau de l'outil (15) pour empêcher une sortie axiale de l'outil (15) hors du porte-outil (1), **caractérisé en ce que** le porte-outil (1) est réalisé selon l'une quelconque des revendications 1 à 12.

14. Procédé de fabrication d'un logement (3 ; 16 ; 17 ; 22 ; 25) déformable pour serrer un outil (15), qui peut être inséré dans un corps de base (2) d'un porte-outil (1) ou qui est réalisé d'un seul tenant avec ledit porte-outil, dans lequel le logement (3 ; 16 ; 17 ; 22 ; 25) présente au moins deux éléments de blocage (12), qui sont réalisés pour venir en prise avec les contre-éléments (13) correspondants au niveau de l'outil (15) afin d'empêcher une sortie axiale de l'outil (15) hors du logement (3 ; 16 ; 17 ; 22 ; 25), dans lequel les éléments de blocage (12) sont disposés dans le logement à distance dans la direction périphérique selon des angles identiques, **caractérisé en ce que** le logement (3 ; 16 ; 17 ; 22 ; 25) est fabriqué au moyen d'un procédé par enlèvement de matériau à partir d'un matériau massif métallique par la production d'un évidement, dans lequel lors de la production de l'évidement pour réaliser les éléments de blocage (12) s'étendant dans la direction périphérique de manière à présenter une forme hélicoïdale et réalisés d'un seul tenant avec le logement (3 ; 16 ; 17 ; 22 ; 25), au moins deux parties faisant saillie dans l'évidement sont évidées ou deux renfoncements sont pratiqués dans le logement.

15. Procédé selon la revendication 14, **caractérisé en ce que** le procédé à enlèvement de matériau est un procédé d'électroérosion et/ou un procédé d'enlèvement par électrochimie ou une combinaison de ces derniers.

16. Procédé de fabrication d'un logement (3 ; 16 ; 17 ; 22 ; 25) déformable pour serrer un outil (15), lequel peut être inséré dans un corps de base (2) d'un porte-outil (1) ou qui est réalisé d'un seul tenant avec ledit porte-outil, dans lequel le logement (3 ; 16 ; 17 ; 22 ; 25) présente au moins deux éléments de serrage (12), qui sont réalisés pour venir en prie avec les contre-éléments (13) correspondants au niveau de l'outil (15) afin d'empêcher une sortie axiale de l'outil (15) hors du logement (3 ; 16 ; 17 ; 22 ; 25), dans lequel les éléments de blocage (12) sont disposés dans le logement à distance dans la direction périphérique selon des angles identiques, **caractérisé en ce que** le logement (3 ; 16 ; 17 ; 22 ; 25) est fabriqué à partir d'une poudre de céramique et/ou de métal par frittage par compression ou par frittage au laser, dans lequel lors de la production de l'évidement pour réaliser les éléments de blocage (12) s'étendant dans la direction périphérique de manière à présenter une forme hélicoïdale et réalisés d'un seul tenant avec le logement (3 ; 16 ; 17 ; 22 ; 25), au moins deux parties faisant saillie dans l'évidement sont évidées ou deux renfoncements sont pratiqués dans le logement.
